Europäisches Patentamt

European Patent Office

Office européen des brevets

(11) Veröffentlichungsnummer: **0 214 321**
**B1**

(12) **EUROPÄISCHE PATENTSCHRIFT**

(45) Veröffentlichungstag der Patentschrift:
31.05.89

(51) Int. Cl.⁴: **F16J 9/16**, F16J 9/06

(21) Anmeldenummer: 85111059.3

(22) Anmeldetag: 02.09.85

(54) Anordnung zur Abdichtung eines Refrigeratorverdrängers.

(43) Veröffentlichungstag der Anmeldung:
18.03.87 Patentblatt 87/12

(45) Bekanntmachung des Hinweises auf die Patenterteilung:
31.05.89 Patentblatt 89/22

(84) Benannte Vertragsstaaten:
CH DE FR GB LI NL

(56) Entgegenhaltungen:
WO-A-82/03678
DE-A- 3 213 807
FR-A- 2 448 634
FR-A- 2 517 407

(73) Patentinhaber: LEYBOLD AKTIENGESELLSCHAFT,
Bonner Strasse 498, D-5000 Köln 51(DE)

(72) Erfinder: Kiese, Gerhard, Dr., Minzenweg 9,
D-5000 Köln 50(DE)

(74) Vertreter: Leineweber, Jürgen, Dipl.-Phys.,
Nagelschmiedshütte 8, D-5000 Köln 40(DE)

**Beschreibung**

Die Erfindung bezieht sich auf eine Anordnung zur Abdichtung eines Refrigeratorverdrängers gegenüber seiner zylindrischen Gehäusewandung, welche einen in einer Nut im Verdränger geführten Kolbenring aus Kunststoff mit Z-förmigem Spalt und einen innerhalb des Kolbenringes angeordneten Federring umfaßt.

Refrigeratoren sind Tieftemperatur-Kältemaschinen, in denen thermodynamische Kreisprozesse ablaufen (vergleiche z.B. die US-PS 29 06 101). Ein einstufiger Refrigerator umfaßt im wesentlichen eine zylindrische Kammer mit einem Verdränger, der mit einem Antrieb (elektrisch, pneumatisch) gekoppelt ist und in der Kammer Hin- und Herbewegungen ausführt. Die Kammer wird in bestimmter Weise - ebenfalls alternierend - mit einer Hochdruck- und einer Niederdruckgasquelle verbunden. Dieses Arbeitsgas strömt vor und nach seiner Entspannung durch den im Verdränger angeordneten Regenerator des Refrigerators, so daß während der Hin- und Herbewegung des Verdrängers der thermodynamische Kreisprozeß (Stirling-Prozeß, Gifford/McMahon-Prozeß usw.) abläuft. Die Folge ist, daß einem bestimmten Bereich der Kammer Wärme entzogen wird. Mit zweistufigen Refrigeratoren dieser Art und Helium als Arbeitsgas lassen sich Temperaturen bis unter 10 K erzeugen.

Eine kritische, für die funktion des Refrigerators entscheidende Stelle ist die notwendigerweise schmiermittelfreie Abdichtung des Verdrängers gegenüber der Innenwandung des ihn umgebenden Gehäuses. Die Abdichtung muß einerseits hohen Dichtheitsanforderungen genügen, um den Strom des Arbeitsgases durch den Regenerator sicherzustellen. Andererseits soll die Abdichtung eine möglichst geringe Reibung erzeugen, da mit dieser Reibung eine unerwünschte Wärmeentwicklung verbunden ist.

Als Dichtungsmaterial hat sich wegen der günstigen Gleiteigenschaften Kunststoff, vorzugsweise PTFE, durchgesetzt. Nachteilig an diesem Material ist jedoch sein stark ungleichmäßiges und irreversibles Schrumpfverhalten. Selbst bei aus ein und demselben Materialblock hergestellten Ringen ist das Schrumpfverhalten nicht gleichmäßig. Bei Dichtringen für Refrigeratoren treten diese Nachteile wegen der besonders hohen Temperaturdifferenzen besonders stark in Erscheinung.

Aus der US-PS 43 55 519 ist eine Dichtungsanordnung der eingangs genannten Art bekannt. Sie besteht aus einem Dichtring mit innen anliegendem Federring. Der Dichtring ist in einem zur Ringmitte konzentrischen, also zur Ringebene vertikalen Schnitt Z-förmig gestaltet. Die einander überlappenden Abschnitte sollen aufgrund von Temperaturänderungen oder Verschleiß bewirkte Veränderungen ausgleichen. Außerdem ist eine Seitenwandung der Nut, in der der Dichtring geführt ist, axial verschiebbar ausgebildet und mit einer axialen Federkraft derart beaufschlagt, daß sie dem Dichtring ständig anliegt. Nachteilig an dieser Ausführungsform ist ihr komplizierter Aufbau. Der axial verschiebbare, eine Seitenwand der Nut bildende Ring kann nicht als Federring ausgebildet sein, so daß der Verdränger zweiteilig aufgebaut sein muß, um diesen Ring montieren zu können. Weiterhin ist die Abdichtung bereits nach einem geringfügigen Schrumpfen des Ringmaterials nicht mehr vollkommen, da die entstehenden radial gerichteten Öffnungen über den Raum, in der der Federring angeordnet ist, miteinander verbunden sind.

Aus der US-A 3 455 561 ist ein Kolbenring mit einem in Ringebene kreisabschnittförmig ausgebildeten Spalt bekannt. Dieser Ring hat den Nachteil, daß sich die Ringbreite im Bereich des Spaltes verändert, wenn das Material schrumpft. Eine sich verändernde Ringbreite bewirkt, daß die vom inneren Federring ausgeübten, nach außen gerichteten Kräfte im Bereich des Ringumfangs nicht mehr gleichmäßig sind.

Zum Stand der Technik gehört auch noch der Inhalt der FR-A 2 517 407, in der die Verwendung von zwei axial einander anliegenden Kolbenringen beschrieben wird. Das Kolbenringpaar dient der Abdichtung des Kolbens einer Verbrennungsmaschine. Hinweise darauf, wie eine schmiermittelfreie Abdichtung des Verdrängers eines Refrigerators zu gestalten ist, enthält diese Anmeldeschrift nicht.

Der vorliegenden Erfindung liegt die Aufgabe zugrunde, eine Dichtungsanordnung der eingangs genannten Art zu schaffen, die dem stark unterschiedlichen Schrumpfverhalten des Ringmaterials Rechnung trägt und bei der die Gleichmäßigkeit der vom inneren Federring im Bereich des Kolbenringsumfanges ausgeübten Kräfte sich auch nach Schrumpfbewegungen des Ringmaterials nicht verändert.

Erfindungsgemäß wird diese Aufgabe dadurch gelöst, daß zwei axial einander anliegende Kolbenringe vorgesehen sind, deren Spaltöffnungen versetzt zueinander, vorzugsweise um 180°, angeordnet sind und in Ringebene eine im wesentlichen z-förmige Gestalt haben.

Eine Dichtungsanordnung dieser Art erfüllt die bei Refrigeratoren geforderten Ansprüche in besonderem Maße. Solange im Spaltbereich der Dichtringe einander überlappende Abschnitte vorhanden sind, bildet das Ringpaar eine sichere axiale Abdichtung. Die Breite des Rings ändert sich durch ihr Schrumpfen im wesentlichen nicht, so daß die vom inneren Federring im Bereich des Außenumfanges der Kolbenringe erzeugten Kräfte gleichmäßig bleiben. Dieses ermöglicht die Wahl einer sehr kleinen Federkraft, was eine geringe Reibung zur Folge hat. Eine Verringerung der Reibung bedeutet eine Reduktion der Wärme und auch des Verschleißes.

Ein weiterer Vorteil besteht darin, daß der mittlere Abschnitt der Z-förmig gestalteten Ringspaltöffnungen relativ lang ausgebildet werden kann. Er kann sich z.B. über einen Winkel von 15 bis 45°, vorzugsweise 30° erstrecken. Dadurch wird sichergestellt, daß selbst ein starkes Schrumpfen des Ringmaterials die Dichtheit nicht beeinträchtigt.

Um eine über die Ringperipherie gleichmäßige Anpreßkraft zu erzeugen, ist es zweckmäßig, als Federring eine Drahtwendel zu verwenden, deren Achse in Ringebene liegt, so daß die Vielzahl der Windungen den Dichtungsringen von innen anliegen. Ein Federring dieser Art ist zu Rückstellkräften fähig, wenn entweder sein ursprünglich runder Querschnitt zu einem ovalen Querschnitt deformiert wird oder wenn seine Wendeln eine gegenüber der radialen Richtung geneigte Stellung einnehmen.

Weitere Vorteile und Einzelheiten der Erfindung sollen anhand von in den Spuren 1 bis 3 dargestellten Ausführungsbeispielen erläutert werden. Es zeigen

Fig. 1 einen Horizontalschnitt durch einen Verdränger in Höhe seiner die Dichtungsanordnung nach der Erfindung aufnehmenden Nut,

Fig. 2 einen Vertikalschnitt durch eine Dichtungsanordnung nach Fig. 1 und

Fig. 3 einen Horizontalschnitt nach Fig. 1 mit im zylindrischen Gehäuse angeordneten Verdränger.

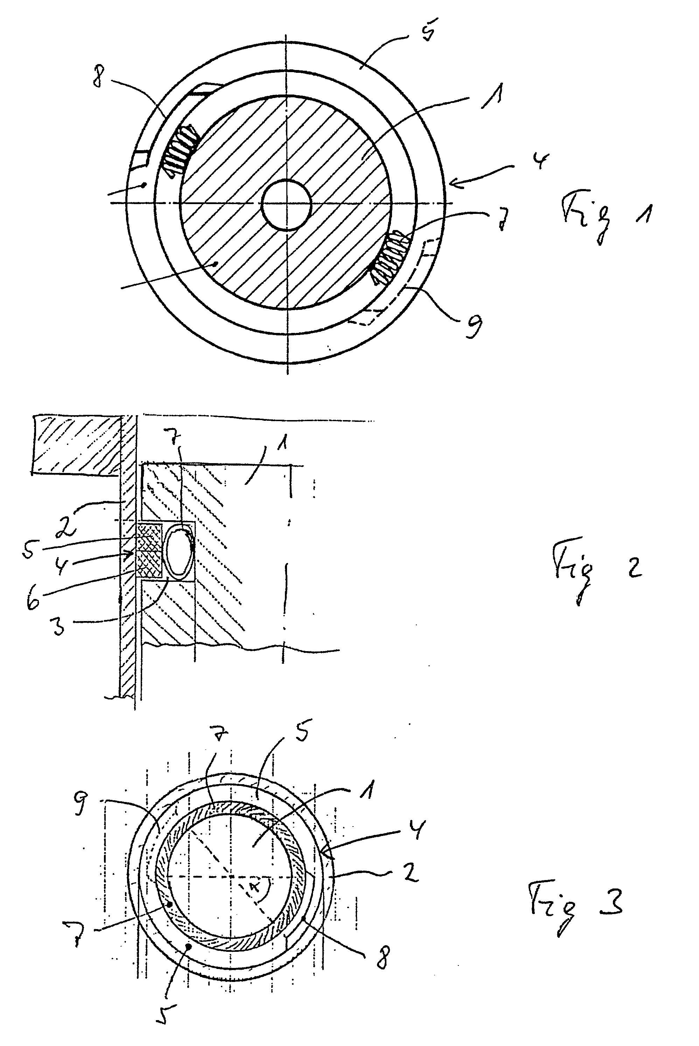

In den Figuren sind der Verdränger mit 1, sein zylindrisches Gehäuse mit 2, die Nut im Verdränger 1 mit 3 und das in dieser Nut geführte Dichtsystem allgemein mit 4 bezeichnet. Das Dichtsystem besteht aus den beiden z.B. aus PTFE bestehenden Kolbenringen 5 und 6 und dem Federring 7. Der Federring 7 ist als Drahtwendel ausgebildet, deren Achse in Ringebene liegt. Seine Enden sind miteinander verschweißt. Die Rückstellkräfte werden dadurch erzeugt, daß er mit zur Radialen geneigten Wendeln (vgl. Fig. 3) in den Zylinder 2 eingebaut wird.

Die Ringe 5 und 6 sind jeweils mit in Ringebene Z-förmig gestalteten Ringspaltöffnungen 8, 9 versehen, die um 180° zueinander versetzt sind. Die Ringspaltöffnung 9 des jeweils unten liegenden Ringes ist gestrichelt dargestellt.

Figur 1 zeigt die Dichtungsanordnung in einem nicht im zylindrischen Gehäuse 2 eingebauten Zustand. Die Wendeln des Dichtungringes 7 sind im wesentlichen radial gerichtet, so daß auch der Umfang der Ringe 5 und 6 erweitert ist.

Die Figuren 2 und 3 zeigen die Dichtungsanordnung nach Figur 1 in einem im zylindrischen Gehäuse 2 eingebauten Zustand. Die Wendeln des Dichtringes 7 sind zur Radialen geneigt, so daß sie eine über den Umfang der Ringe gleichmäßig verteilte Anpreßkraft erzeugen. Die mittleren Abschnitte der Z-förmigen Spaltöffnungen 8 und 9 erstrecken sich über einen Winkel alpha von etwa 30°. Solange aufgrund des Schrumpfens des Ringmaterials Umfangsänderungen eintreten, die kleiner sind, als es dem Winkel von 30° entspricht, sind im Bereich der Ringöffnungen 8 und 9 einander überlappende Abschnitte vorhanden. Selbst bei einem starken Schrumpfungsverhalten ist deshalb die radiale Dichtheit und durch das Übereinanderliegen zweier Dichtungen auch die axiale Dichtheit der erfindungsgemäßen Dichtungsanordnung gewährleistet.

## Patentansprüche

1. Anordnung zur Abdichtung eines Refrigerator-Verdrängers (1) gegenüber seiner zylindrischen Gehäusewandung (2), welche einen in einer Nut (3) im Verdränger geführten Kolbenring aus Kunststoff mit Z-förmigem Spalt und einen innerhalb des Kolbenringes angeordneten Federring (7) umfaßt, dadurch gekennzeichnet, daß zwei axial einander anliegende Kolbenringe (5, 6) vorgesehen sind, deren Spaltöffnungen (8, 9) zueinander versetzt, vorzugsweise um 180°, angeordnet sind und in Ringebene eine im wesentlichen Z-förmige Gestalt haben.

2. Anordnung nach Anspruch 1, dadurch gekennzeichnet, daß der mittlere Abschnitt der Z-förmig gestalteten Ringspaltöffnungen (8, 9) konzentrisch und jeweils etwa in der Mitte der radialen Ringbreite verläuft.

3. Anordnung nach Anspruch 1 oder 2, dadurch gekennzeichnet, daß sich der mittlere Abschnitt der Z-förmig gestalteten Ringspaltöffnungen (8, 9) über 15 bis 45°, vorzugsweise 30°, erstreckt.

4. Anordnung nach einem der Ansprüche 1, 2 oder 3, dadurch gekennzeichnet, daß der Federring (7) als Drahtwendel ausgebildet ist, deren Achse in Ringebene liegt.

## Claims

1. An arrangement for sealing a refrigerator displacement compressor (1) with respect to the cylindrical wall (2) of its housing, the arrangement comprising a piston ring of plastics with a Z-shaped gap, guided in a groove (3) in the displacement compressor, and a spring ring (7) arranged inside the piston ring, characterized in that two piston rings (5, 6) resting axially against one another are provided, the openings (8, 9) at the gaps in which are arranged offset from one another, preferably by 180°, and in the plane of the ring have an essentially Z-shaped contour.

2. An arrangement as in Claim 1, characterized in that the middle segment of the opening (8, 9) of Z-shaped contour at the gap in a ring runs concentrically and about in the centre of the radial width of the ring.

3. An arrangement as in Claim 1 or 2, characterized in that the middle segment of the opening (8, 9) of Z-shaped contour at the gap in a ring extends over 15 to 45°, preferably 30°.

4. An arrangement as in one of the Claims 1, 2 or 3, characterized in that the spring ring (7) is made as a wire spiral the axis of which lies in the plane of the ring.

## Revendications

1. Dispositif pour l'étanchéité d'un piston volumétrique (1) de réfrigérateur à l'égard de sa paroi cylindrique (2) de carter, qui comporte un segment annulaire de piston, en plastique, guidé, dans une rainure (3), dans le piston volumétrique et présentant une fente en forme de Z, ainsi qu'un anneau élastique (7) disposé à l'intérieur du segment annulaire de piston, caractérisé en ce qu'il est prévu deux segments annulaires (5, 6) de piston qui sont placés axialement l'un contre l'autre et dont les ouvertures (8, 9) formant les fentes sont disposées, décalées l'un de l'autre, de préférence de 180°, et ont sensiblement la forme d'un Z dans un plan annulaire.

2. Dispositif selon la revendication 1, caractérisé en ce que le tronçon médian des ouvertures (8, 9) formant les fentes annulaires en forme de Z est orienté concentriquement et, chaque fois, à peu près au milieu de la largeur du segment annulaire, dans le sens radial.

3. Dispositif selon la revendication 1 ou 2, caractérisé en ce que le tronçon médian des ouvertures (8, 9) formant les fentes annulaires en forme de Z s'étend sur 15 à 45°, de préférence 30°.

4. Dispositif selon l'une des revendications 1, 2 ou 3, caractérisé en ce que l'anneau élastique (7) est conçu sous forme de fil enroulé en spirale dont l'axe se situe dans un plan annulaire.

EP 0 214 321 B1

Fig 1

Fig 2

Fig 3